# EUROPEAN PATENT SPECIFICATION

(11) **EP 2 094 111 B1**
(45) Date of publication and mention of the grant of the patent: **16.07.2014**
(21) Application number: 07860859.3
(22) Date of filing: 24.12.2007
(51) Int. Cl.: A23L 1/226, A23L 1/22

(54) **LOW SODIUM, HIGH CALCIUM, PROTEIN HYDROLYSATE FLAVOR ENHANCER AND A METHOD PREPARE THEREOF**
PROTEINHYDROLYSAT-GESCHMACKSVERSTÄRKER MIT GERINGEM NATRIUM- UND HOHEM CALCIUMGEHALT SOWIE ZUBEREITUNGSVERFAHREN
EXHAUSTEUR DE GOÛT À FAIBLE TENEUR EN SODIUM ET FORTE TENEUR EN CALCIUM, À BASE D'HYDROLYSAT DE PROTÉINES ET SON PROCÉDÉ D'ÉLABORATION

(30) Priority: 28.12.2006 MY 0604780
(43) Date of publication of application: 02.09.2009
(73) Proprietor: Universiti Putra Malaysia, Selangor (MY)
(72) Inventor: MOHAMED, Suhaila, Selangor (MY)
(74) Representative: Hertz, Oliver
(86) International application number: PCT/MY2007/000091
(87) International publication number: WO 2008/082286

(56) References cited:
- EP-A1- 1 163 853
- EP-A2- 0 363 771
- WO-A1-98/18342
- CN-A- 1 718 097
- KR-A- 20040 048 650
- US-A- 2 444 577
- US-A- 4 798 736
- US-A- 4 986 998
- US-A- 5 077 062
- US-A- 5 711 985
- US-A- 5 716 801
- US-A- 6 007 851
- US-B1- 6 190 709
- US-B1- 6 251 443
- POMMER K: "NEW PROTEOLYTIC ENZYMES FOR THE PRODUCTION OF SAVORY INGREDIENTS", CEREAL FOODS WORLD, AMERICAN ASSOCIATION OF CEREAL CHEMISTS, INC, US, vol. 40, no. 10, 1 October 1995 (1995-10-01), pages 745-748, XP000672509, ISSN: 0146-6283

## Description

### FIELD OF THE INVENTION

The present invention is directed to a process to produce a flavor enhancer containing low sodium (<0.12%) and high calcium content without losing its tasty quality. In particular, the flavor enhancer is prepared from protein hydrolysate suitable to be used by hypertensive and kidney failure patients, or those who are genetically pre-disposed to such disorders.

### BACKGROUND OF THE INVENTION

Many of the flavor enhancer or condiments such as soy sauce available in the retail market are made up of mixture of fermented liquid soy sauce containing high concentration of sodium salts (more than 7%). Hypertensive and kidney failure patients often find their requirements for low sodium diet; result in food that lack taste and flavor because of their restriction in consuming the available flavor enhancer or condiment in the market. To enhance the flavor of the savory food, hydrolyzed proteins are often used. Hydrolyzed protein available commercially can reduce the requirement of sodium salt in food to a certain extent, yet the sodium content still relatively high for the hypertensive and kidney failure patients.

Patent application WO9425580 disclosed a method to prepare hydrolysate by using novel combination of enzymes, namely Flavourzyme, which can be used for different products including flavor enhancer. However, this patent application did not detail any further procedures on how to prepare a low sodium, high calcium flavor enhancer from the hydrolysate produced thereon. In US patent no. 5866357, Claus *et. al* disclosed another method which specifically cleaves the protein sources at Glu/Asp site using a specific type of enzyme to produce hydrolysate. Similarly, Claus *et*. *al* did not expressly teach any detail on making a low sodium, high calcium flavor enhancer from the hydrolysate produced. Another US patent no. 5985337 has claimed a process to produce hydrolysate from smoked meat solely. Patent WO0128353 includes a method in preparing hydrolysate using proteolytic composition derives from fishes. On the other hand, US patent 5141756 has claimed a method of producing soy sauce by fermenting hydrolysed koji to moromi and thus produces soy sauce thereto. Thang *et. al* filed another patent to produce flavoring agent from hydrolyzing the protein source involving two stages enzymolysis.

EP 1 163 853 A1 and US 5,711,985 A both disclose salt flavour enhancer and methods for producing the same in a process of hydrolysing soy protein, preferably by use of proteolytic enzymes.

EP 0 363 771 A2 discloses a process of hydrolyzing a plant or animal protein using hydrochloric acid for producing flavours. Similarly, CN 1 718 097 A discloses a hydrolysed plant protein produced by hydrolyzing corn protein with hydrochloric acid.

US 6,190,709 B2, US 6,007,851 and WO 98/18342 each describe a process of manufacturing a flavour enhancer which is a soy protein hydrolysate by use of proteolytic enzymes.

US 5,077,062 A discloses a soy protein hydrolysate flavour enhancer with a low content of sodium.

### SUMMARY OF THE INVENTION

The present invention aims to disclose a method to produce low sodium, high calcium flavor enhancer, particularly as soy sauce alternative, which is suitable to be applied in food to be consumed by patients facing kidney and hypertension problems.

Another object of the present invention is directed to a simple and cost effective method without using multiple stages of enzymolysis in preparing the flavor enhancer

Still another object of the present invention is to provide low sodium and high calcium flavor enhancers which can flourish the taste of food owing to the free amino acids contained in the flavor enhancer and not via its sodium content; thus reduce the sodium intake among the user and thereon decrease the risk of hypertension in the user.

At least one of the preceding objects is met, in whole or in part, by the present invention, in which one of the embodiments of the present invention includes a method to produce flavor enhancer from plant protein sources which comprises the steps of hydrolyzing protein source such as Roselle seed, animal hide, feathers and defatted soyabean flour in the presence of catalysts at the operating temperature of 25 to 60°C and pH 4-8 to form hydrolystate; maintaining the pH of the hydrolyzing process; deactivating the catalysts in the hydrolysate; adjusting pH of the hydrolysate to 3.5 to 4.5; and filtering the hydrolysate through layers of activated carbon and calcium carbonate to obtain the flavor enhancer.

In order to produce the flavor enhancer, another embodiment of the present invention provides an alternative method which includes the steps of pre-heating defatted protein source such as Roselle seed, animal hide, feathers and defatted Soya bean flour until the temperature reaches at least 60°C; hydrolyzing the pre-heated plant protein source with strong acid to form a mixture; heating the mixture up to 90°C-123°C until the hydrolysis reach at least 65% of the protein sources used; adjusting the pH of the mixture to 3.5 to 4.5 using calcium carbonate; and filtering the mixture through layers of activated carbon and calcium carbonate to obtain the flavor enhancer.

Pursuant to another embodiment of the present invention to improve and modify the taste of the flavor enhancer obtained, the disclosed method further comprise steps of concentrating the obtained flavor enhancer or incorporate other naturally available flavoring agents to the obtained flavor enhancer. The flavoring agent can be any one or combination of polyphenols rich plant extracts, thickeners, preservatives, caramel, onion powder, ginger powder, garlic powder, cinnamon, spices, black peppers and the like.

### BREIF DESCRIPTION OF THE DRAWINGS

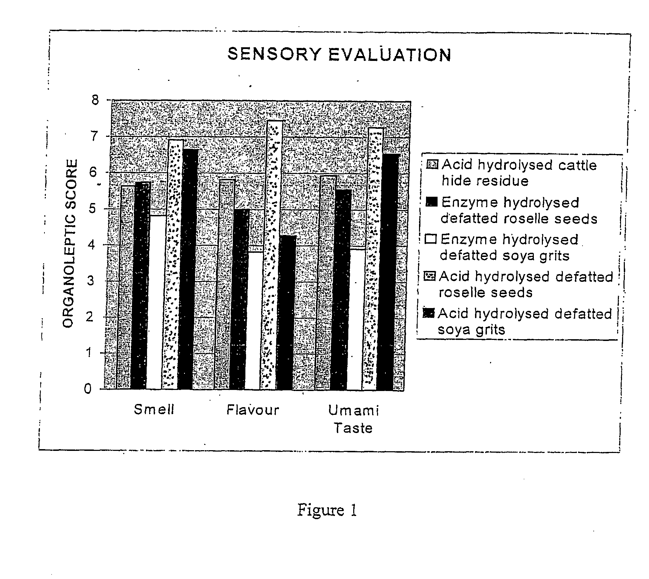

Figure 1 is a graph showing the score in the sensory evaluation test on different flavor enhancers derived from different sources.

### DETAIL DESCRIPTION OF THE INVENTION

It is to be understood that the present invention may be embodied in other specific forms and is not limited to the sole embodiment described above. However modification and equivalents of the disclosed concepts such as those which readily occur to one skilled in the art are intended to be included within the scope of the claims which are appended thereto.

One of the embodiments of the present invention includes a method to produce flavor enhancer from protein sources which comprises the steps of hydrolyzing the protein source such as Roselle seed, animal hide, feathers and defatted soyabean flour in the presence of catalysts at the operating temperature of 23-60°C and pH 4-8 to form hydrolysate; maintaining the pH of the hydrolyzing process; deactivating the catalysts in the hydrolysate; adjusting pH of the hydrolysate to 3.5-4.5; and filtering the hydrolysate through layers of activated carbon and calcium carbonate to obtain the flavor enhancer.

It is important to note that the appetizing flavor of the hydrolysate is mainly due to the free amino acids and small peptides available in the hydrolysate. It is known in the art that if the produced small peptides being cleaved at the site of hydrophobic amino acids, such fragment shall confer the hydrolysate taste bitter instead of appetizing. Consequently, it is crucial in selecting the right proteolytic catalysts and the protein sources to be employed in preparing the hydrolysate thus avoiding the production of the small peptides with bitter taste in the hydrolysate. The present invention preferably chose protein-rich source as the hydrolysate protein source especially those rich in the cysteine, methionine, glutamic acids, serine, proline, phenylalanine, aspartic acid, alanine, glycine, lysine, threonine, tyrosine, arginine and valine. Hence, the hydrolysate produced thereof contains less bitter tasting peptide fragments and so does the flavor enhancer derived. The protein source in the reaction is preferably first mixed with water and catalysts to form a reaction mixture. In the preferred embodiment, the ratio of protein source to water used for hydrolysis is 2-10% in order to have the operational reaction condition. The amount of catalysts used is subjected to change in connection to the amount of protein sources to be hydrolysed. Preferably, the amount of catalysts used to hydrolyze the protein sources is about 0.05-0.5% by weight of total protein source.

The protein-rich sources may consist of defatted soy flour, animal hide, feathers and defatted Roselle seed. The animal hides mentioned herein preferably refer to cattle, chicken, goats or the like. On the other hand, the present invention finds that exozymes such as Flavourzyme that is available commercially is preferred as the catalysts to carry out the disclosed method. Nonetheless, the present invention has no intention to limit the use of other types of proteolytic enzymes as long as similar protein rich sources are employed.

The temperature of the reaction performed is crucial in determining the rate of the reaction. One skilled in the art shall appreciate these biological catalysts' performance is susceptible to changes of temperature, and different types of enzyme may have variation in terms of optimum performance according to their preferred operable temperature, thus any modification in terms of changing the reaction temperature to suit the catalysts performance shall contain within the scope of the present invention. Nonetheless, in the present invention it is preferred to have the reaction temperature maintained within 25°C to 60°C. Temperature exceeds this preferred range may cause denaturization of the catalysts, and retarded reaction rate if the temperature set below the range. Likewise, biological catalysts are susceptible to the pH of the reaction environment. It is known that some of the catalysts can perform well in acidic environment and others in alkaline or near neutral environment. In the preferred embodiment, the disclosed method is performed in the pH of 4 to 8. Adjusting the mixture to the desired pH can simply be achieved by adding in calcium carbonate or acidic solution to the mixture, nevertheless there are still other ways to achieve the same outcome. Moreover, the pH of the reaction is monitored and maintained in the preferable range throughout the reaction in consideration of the accumulated amino acids or small peptides may affect the pH of the reaction thus lead to reduce reaction rate. To improve the yield and rate of hydrolysis process, the reaction mixture is preferably stirred constantly throughout the whole process so that reaction can occur homogeneously.

The hydrolytic process is preferably continued for at least 4 hours and then terminated by deactivating the catalysts. It is possible to have the hydrolysis reaction extended; however, the yield obtained may not positively correlate to the time extended. This is due to lack of reactable substrate by that time thus limiting the productivity of the reaction. One skilled in the art shall know that the reaction duration is subjected to modification based on the amount of the protein source and catalysts used. Common available approaches to deactivate catalysts mainly depend on denaturization of the catalysts by applying heat or render the catalysts in its denaturing pH environment for sufficient of time. In respect to the most preferred embodiment, the deactivation of the catalysts in the present invention is done by heating the obtained hydrolysates at the temperature of 70°C to 100°C in 5 to 20 minutes. It is possible to denature the catalysts by heating the hydrolysate in higher temperature and shorter time than the preferable range. On the other hand, the catalysts can be denatured by changing the hydrolysate pH. The denaturing pH of the catalysts is subjected to modification in accordance to the types of catalysts used. Subsequently, the hydrolysate obtained is then adjusted to the pH of 3.5-4.5 to produce the desirable taste.

Besides of the foregoing embodiments, the present invention involves another method to produce flavor enhancer from plant protein which comprises the steps of pre-heating defatted protein source such as Roselle seed, animal hide, feathers and defatted Soya bean flour to at least 60°C; hydrolyzing the pre-heated protein source with strong acid to form a mixture; heating the mixture up to 90°C to 123°C until the hydrolysis reach at least 65 %; adjusting the pH of the mixture to 3.5-4.5 using calcium carbonate solution to obtained the hydrolysate which can be used as condiment. Complying with the principles of the present invention, the acid hydrolysis method gives another alternative route to produce the appetizing condiment from the protein sources as in the foregoing method. In order to favor the acidic hydrolysis, heat is employed where the mixture is reacted in the temperature of 90-125°C. The process of acidic hydrolysis is preferably to be performed within a close system for duration of at least 12 hours or until the hydrolysis reach the degree of at least 65% of the total protein sources used. Within the close system, the reaction is conducted as if it was performed under positive pressure that favors the hydrolysis process.

After obtaining the hydrolysate, either from enzymatic hydrolysis or acidic hydrolysis process, the hydrolysate is purified by filtering the mixture through layers of activated carbon and calcium carbonate before to be used as flavor enhancer. Through the filtration, the unreacted protein sources are removed from the hydrolysate. Moreover, larger fragments of the cleaved polypeptides which do not contribute in flavoring in contrast to the small free amino acids counterparts are being removed too. Exercising such filtration method also enables the present invention in getting rid of the reacted or unreacted inorganic chemicals used in hydrolysis process, especially those used for pH adjustment and in acidic hydrolysis. It should be noted that these chemical compounds are known to be possessing unpleasant taste, which may then affect the quality of the produced flavor enhancer. The hydrolysate passed through the layers of calcium bicarbonate will be greatly improved in its calcium content. It is known in the art that calcium content is beneficial to hypertension patients. The hydrolysate being processed through the filtration step is ready to be consumed or used as flavor enhancer.

In the conventional available hydrolysis methods, sodium hydroxide and chloride acid are used not only for adjusting the pH condition of the process and the obtained flavor enhancer but also as a means to flourish the taste of the produced flavor enhancer thus increasing the sodium content of the flavor enhancer produced. According to the most preferred embodiment in the present invention, all the pH adjustment or maintenance in either enzymatic hydrolysis or acidic hydrolysis are achieved by using, but not limited to, citric acid and carbonate salt such as calcium bicarbonate that can reduce the available sodium content of the produced flavor enhancer. Use of other hydroxide salts was found by the inventors of the present invention that affect the flavor of the produce flavor enhancer.

Pursuant to the preferred embodiment in the present invention, the produced hydrolysate can be further concentrated to improve its flavor. Such practice is known by person skilled in the art in improving the quality of the produced flavor enhancer. Optionally, other naturally available flavoring agents can be incorporated into the produced flavor enhancer thus flourishing its taste. The other flavoring agents can be any one or combinations of polyphenols rich extracts, thickeners, preservatives, caramel, onion powder, ginger powder, garlic powder, cinnamon, spices, black peppers and the like. The flavoring agents used may render beneficial effect to the consumer for example polyphenols rich extracts with blood vessels relaxation properties may be found beneficial to the consumers with hypertension problem.

It is patentably important to be mentioned herein that the flavor enhancer obtained from any of the abovementioned embodiments is characterized by containing sodium level below 0.12% by weight and high calcium (double the normal content of similar products). With such low sodium, high calcium content while having the appetizing flavor, the flavor enhancer derives from the present invention is suitable to be consumed for those intended to lower their sodium intake in order to avoid or alleviate the disease state of hypertension and kidney failure.

The following example is intended to further illustrate the invention, without any intent for the invention to be limited to the specific embodiments described therein.

### EXAMPLE 1

Optimum hydrolysis conditions were conducted by filling up reaction vessel with a known amount of deionised water at the optimum operating temperature and protein (e.g. Roselle seed, animal hide, feathers, defatted soyabean flour) substrate concentration for the protease (e.g. Flavourzyme, mixtures of exo and endopeptidases) used. The pH of the slurry was adjusted using 0.1 M Calcium carbonate and 0.1 M HCl, to the optimum pH of the protease. A known amount of protease was then added to the reactor. As the hydrolysis proceed, protons released were neutralised by addition of 0.1 M CaCO₃ into the reactor. The mixture was constantly stirred when the CaCO₃ was added to ensure uniform distribution. After 5 hours, the samples were collected, boiled for 10 minutes, adjusted to pH 3.5-4.5, using citric acid or CaCO₃, and vacuum filtered through a layer of activated carbon and CaCO₃.

The hydrolysates may be added with polyphenols rich extracts which have blood vessels relaxation properties, thickeners, preservatives, caramel, onion powder, ginger powder, garlic powder, cinnamon, spices and black pepper to taste and boiled at 100°C to concentrate it to form low sodium, high calcium vegemite alternative which have blood pressure lowering properties.

### EXAMPLE 2

Defatted protein substrate suspension (such as Roselle seed, soy cake, animal hide, feathers) was preheated to 60°C, into which a strong acid e.g HCl was added, heated to 100°C in a closed system for 24 hours, until the degree of hydrolysis reached about 90%. The protein hydrolysate was then cooled to ambient, adjusted to pH 3.5-4.5, using citric acid or CaCO₃, and vacuum filtered through a layer of activated carbon and CaCO₃.

The hydrolysates may be added with polyphenols rich extracts which have blood vessels relaxation properties, thickeners, preservatives, caramel, onion powder, ginger powder, garlic powder, cinnamon, spices and black pepper to taste and boiled at 100°C to concentrate it to form low sodium, high calcium vegemite alternative which have blood pressure lowering properties.

### EXAMPLE 3 -

Sensory evaluation had been conducted on different available hydrolysate produced from the acidic hydrolysis process and enzymatic hydrolysis process with different source of plant protein sources. In the sensory evaluation test, 4 different formulations and the other commercially available formulation of porridge were applied to a scoring method according to 20 untrained judges for evaluation. The results are analyzed by analysis of variance. The rating assigned by the judges was given numerical values, ranging from 1 point for dislike extremely to 9 points for like extremely. The sensory evaluation test of the hydrolysates consists of (1) flavor description and intensity; (2) tastes; (3) hedonic test on a scale of 1 to 9 for acceptability and (4) flavor enhancing ability of the hydrolysates when served with porridge.

The sensory results generally show that the hydrolysates produced meaty and soy sauce-like flavors. The results of the test are summarized in the table shown below.

**Table 1**

| | Defatted Soy Flour Enzymatic Hydrolysate | Roselle Seed Enzymatic Hydrolysate | Defatted Soy Flour Acidic Hydrolysate | Roselle Seed Acidic Hydrolysate | Soya Sauce 10% | Aijeiki 10% | Salt 1.0% |
|---|---|---|---|---|---|---|---|
| Odor | ^{A}6.27^{a} | ^{A}5.64^{ab} | ^{A}6.09^{a} | AB5.32^{a} | ^{A}6.36^{a} | ^{A}5.45^{ab} | ^{A}4.64^{b} |
| Color | ^{A}5.55^{a} | ^{A}5.73^{a} | B5.09^{a} | B5.36^{a} | ^{A}6.09^{a} | ^{A}4.91^{ab} | ^{A}3.9^{b} |
| Taste | ^{A}5.91^{abc} | ^{A}5.27^{a} | ^{A}6.36^{ab} | ^{A}6.36^{ab} | ^{A}6.64^{a} | ^{A}5.45^{bc} | ^{A}4.18^{d} |
| Overall Acceptance | ^{A}6.09^{a} | ^{A}6.09^{a} | ^{A}6.27^{a} | ^{A}6.27^{a} | ^{A}6.45^{a} | ^{A}5.55^{a} | ^{A}4.18^{b} |

| | | | | | | | |
|---|---|---|---|---|---|---|---|
| # Means with the same letter are not significantly different at 5% level (P<0.05) # A, B, C... is Duncan's grouping for comparing between sensory attributes for each sample; # a, b, c... is Duncan's grouping for comparing between samples for each type of sensory attribute. | | | | | | | |

The present disclosure includes as contained in the appended claims, as well as that of the foregoing description. Although this invention has been described in its preferred form with a degree of particularity, it is understood that the present disclosure of the preferred form has been made only by way of example and that numerous changes in the details of construction and the combination and arrangements of parts may be resorted to without departing from the scope of the invention.

## Claims

1. A method to produce flavor enhancer comprising hydrolyzing a protein source which method comprises
(i) hydrolyzing the protein source in presence of catalysts or
(ii) hydrolyzing the protein source with a strong acid,
wherein hydrolyzing the protein source in presence of catalysts comprises the steps:
(ia) hydrolyzing the protein source in presence of catalysts at an operating temperature of 25°C to 60°C and pH 4 to 8 to form a hydrolysate;
(ib) maintaining the pH of the hydrolyzing process;
(ic) deactivating the catalysts in the hydrolysate;
and wherein hydrolyzing the protein source with a strong acid comprises the steps:
(iia) pre-heating the protein source to at least 60°C;
(iib) hydrolyzing the heated protein source with a strong acid to form a mixture;
(iic) heating the mixture up to 90°C-125°C until the hydrolysis reaches at least 65% of the protein source used; and which method further comprises the steps:
(d) adjusting the pH of the hydrolysate obtained in step ic) or of the mixture obtained in step (iic) to 3.5-4.5; and
(e) filtering the hydrolysate or the mixture obtained in step (d) through layers of activated carbon and calcium carbonate to obtain the flavor enhancer.

2. A method as in claim 1, further comprising the step of concentrating the obtained flavor enhancer.

3. A method as in claims 1 and 2, further comprising the step of adding any one or combinations of polyphenols rich extracts, thickeners, preservatives, caramel, onion powder, ginger powder, garlic powder, cinnamon, spices, and black peppers to the obtained flavor enhancer.

4. A method as in claims 1 to 3, wherein said protein sources are plant proteins selected from a group consisting of Roselle seed and defatted Soya bean flour.

5. A method as in claims 1 to 3, wherein said protein sources are animal hide or feathers.

6. A method as in claims 1 to 3, wherein said catalysts are proteolytic enzymes.

7. A method as in claims 1 to 3, wherein said deactivating the catalysts is done by applying heat to the hydrolysate.

8. A method as in claims 1 to 3, wherein said deactivating the catalysts in done by changing the pH of the hydrolysate to below 3.0.

9. A method as in claim 1, wherein the pH is adjusted and maintained by using citric acid and calcium carbonate.

10. A method as in claims 1 to 3, wherein said strong acid is hydrochloric acid.

11. A flavor enhancer obtainable by the method of any of the preceding claims **characterized by** containing a sodium level below 1% by weight.

## Patentansprüche

1. Verfahren zur Herstellung eines Geschmacksverstärkers, umfassend das Hydrolysieren einer Proteinquelle, wobei das Verfahren umfasst:
(i) Hydrolysieren der Proteinquelle in Gegenwart von Katalysatoren oder
(ii) Hydrolysieren der Proteinquelle mit einer starken Säure;
wobei das Hydrolysieren der Proteinquelle in Gegenwart von Katalysatoren die folgenden Schritte umfasst:
(ia) Hydrolysieren der Proteinquelle in Gegenwart von Katalysatoren bei einer Arbeitstemperatur von 25°C bis 60°C und pH 4 bis 8, um ein Hydrolysat zu bilden;
(ib) Aufrechterhalten des pH-Werts des Hydrolyseprozesses;
(ic) Deaktivieren der Katalysatoren in dem Hydrolysat;
und wobei das Hydrolysieren der Proteinquelle mit einer starken Säure die folgenden Schritte umfasst:
(iia) Vorwärmen der Proteinquelle auf mindestens 60°C;
(iib) Hydrolysieren der erwärmten Proteinquelle mit einer starken Säure, um eine Mischung zu bilden;
(iic) Erwärmen der Mischung auf 90°C - 125°C bis die Hydrolyse mindestens 65 % der verwendeten Proteinquelle erreicht;
und wobei das Verfahren ferner die Schritte umfasst:
(d) Einstellen des pH-Werts des in Schritt (ic) erhaltenen Hydrolysats oder der in Schritt (iic) erhaltenen Mischung auf 3, 5 - 4,5; und
(e) Filtrieren des Hydrolysats oder der Mischung, das/die in Schritt (d) erhalten wurde, durch Schichten von Aktivkohle und Calciumcarbonat, um den Geschmacksverstärker zu erhalten.

2. Verfahren nach Anspruch 1, welches ferner den Schritt der Konzentration des erhaltenen Geschmacksverstärkers umfasst.

3. Verfahren nach den Ansprüchen 1 und 2, welches ferner den Schritt der Zugabe irgendeines oder von Kombinationen von Polyphenol-reichen Extrakten, Verdickungsmitteln, Konservierungsmitteln, Karamell, Zwiebelpulver, Ingwerpulver, Knoblauchpulver, Zimt, Gewürzen und schwarzem Pfeffer zu dem erhaltenen Geschmacksverstärker umfasst.

4. Verfahren nach den Ansprüchen 1 bis 3, wobei die Proteinquellen Pflanzenproteine sind, die aus einer Gruppe, bestehend aus Roselle-Samen und fettarmem Sojabohnenmehl, ausgewählt sind.

5. Verfahren nach den Ansprüchen 1 bis 3, wobei die Proteinquellen Tierhaut oder Federn sind.

6. Verfahren nach den Ansprüchen 1 bis 3, wobei die Katalysatoren proteolytische Enzyme sind.

7. Verfahren nach den Ansprüchen 1 bis 3, wobei das Deaktivieren der Katalysatoren durch Zufuhr von Wärme zu dem Hydrolysat erfolgt.

8. Verfahren nach den Ansprüchen 1 bis 3, wobei das Deaktivieren der Katalysatoren durch Veränderung des pH-Werts des Hydrolysats auf unter 3,0 erfolgt.

9. Verfahren nach Anspruch 1, wobei der pH unter Verwendung von Citronensäure und Calciumcarbonat eingestellt und aufrechterhalten wird.

10. Verfahren nach den Ansprüchen 1 bis 3, wobei die starke Säure Salzsäure ist.

11. Geschmacksverstärker, erhältlich durch das Verfahren nach irgendeinem der vorhergehenden Ansprüche, **dadurch gekennzeichnet, dass** er ein Natriumniveau unter 1 Gew.-% enthält.

## Revendications

1. Procédé de production d'un exhausteur de goût, comprenant l'hydrolyse d'une source de protéine, lequel procédé comprend :
(i) l'hydrolyse de la source de protéine en présence de catalyseurs ou
(ii) l'hydrolyse de la source de protéine avec un acide fort, dans lequel l'hydrolyse de la source de protéine en présence de catalyseurs comprend les étapes suivantes :
(ia) l'hydrolyse de la source de protéine en présence de catalyseurs à une température de service de 25 °C à 60 °C et un pH de 4 à 8 afin de former un hydrolysat ;
(ib) le maintien du pH du processus d'hydrolyse ;
(ic) la désactivation des catalyseurs dans l'hydrolysat ;
et dans lequel l'hydrolyse de la source de protéine avec un acide fort comprend les étapes suivantes :
(iia) le préchauffage de la source de protéine à au moins 60 °C ;
(iib) l'hydrolyse de la source de protéine chauffée avec un acide fort afin de former un mélange ;
(iic) le chauffage du mélange jusqu'à une température de 90 °C-125 °C jusqu'à ce que l'hydrolyse atteigne au moins 65 % de la source de protéine utilisée ;
et lequel procédé comprend en outre les étapes suivantes :
(d) l'ajustement du pH de l'hydrolysat obtenu à l'étape (ic) ou du mélange obtenu à l'étape (iic) à 3,5 à 4,5 ; et
(e) la filtration de l'hydrolysat ou du mélange obtenu à l'étape (d) à travers des couches de charbon actif et de carbonate de calcium afin d'obtenir le rehausseur de goût.

2. Procédé selon la revendication 1, comprenant en outre l'étape de concentration de l'exhausteur de goût obtenu.

3. Procédé selon les revendications 1 et 2, comprenant en outre l'étape d'ajout de l'un quelconque ou de combinaisons d'extraits riches en polyphénols, d'épaississants, de conservateurs, de caramel, de poudre d'oignon, de poudre de gingembre, de poudre d'ail, de cannelle, d'épices, et de poivres noirs à l'exhausteur de goût obtenu.

4. Procédé selon les revendications 1 à 3, dans lequel lesdites sources de protéine sont des protéines végétales choisies dans un groupe consistant en la graine d'oseille et la farine de soja dégraissée.

5. Procédé selon les revendications 1 à 3, dans lequel lesdites sources de protéine sont des peaux ou des plumes d'animaux.

6. Procédé selon les revendications de 1 à 3, dans lequel lesdits catalyseurs sont des enzymes protéolytiques.

7. Procédé selon les revendications 1 à 3, dans lequel ladite désactivation des catalyseurs se fait en appliquant de la chaleur à l'hydrolysat.

8. Procédé selon les revendications 1 à 3, dans lequel ladite désactivation des catalyseurs se fait en changeant le pH de l'hydrolysat à moins de 3,0.

9. Procédé selon la revendication 1, dans lequel le pH est ajusté et maintenu en utilisant de l'acide citrique et du carbonate de calcium.

10. Procédé selon les revendications 1 à 3, dans lequel ledit acide fort est l'acide chlorhydrique.

11. Exhausteur de goût que l'on peut obtenir par le procédé de l'une quelconque des revendications précédentes, **caractérisé en ce qu'**il contient un taux de sodium en dessous de 1 % en poids.
